# EUROPEAN PATENT SPECIFICATION

(11) **EP 4 403 078 B1**
(45) Date of publication and mention of the grant of the patent: **16.07.2025**
(21) Application number: 23217265.0
(22) Date of filing: 15.12.2023
(51) Int. Cl.: A47J 42/06, A47J 31/42, A47J 42/40, A47J 42/46

(54) **ELECTRIC COFFEE GRINDER**
ELEKTRISCHE KAFFEEMÜHLE
MOULIN A CAFÉ ÉLECTRIQUE

(30) Priority: 18.01.2023 IT 202300000699
(43) Date of publication of application: 24.07.2024
(73) Proprietor: Roger Technology S.R.L., 31021 Mogliano Veneto (TV) (IT)
(72) Inventor: FLORIAN, Dino, 31021 Mogliano Veneto (TV) (IT)
(74) Representative: Piovesana, Paolo

(56) References cited:
- EP-A1- 3 808 236
- US-B2- 10 016 087

## Description

The present invention concerns an electric coffee grinder.

Electric coffee grinders are known which are provided with a substantially cylindrical grinding chamber, in which a fixed grinder is placed, connected to the chamber itself, and a mobile grinder, coupled to an electric motor for its rotation with respect to the fixed grinder within the grinding chamber. The coffee beans are dropped between the two grinders to be broken and progressively transformed into powder of the desired grain size, essentially linked to the type of the two grinders and their distance from each other.

The coffee dust that comes out of the grinders collects on the bottom and on the side wall of the grinding chamber and is evacuated from it by an impeller integral with the mobile grinder and dragged into rotation with it. The impeller, which is generally made of metallic material and preferably aluminium, includes several substantially vertical arms, which slide at a minimum distance from the side wall of the grinding chamber and collect the coffee powder, which adheres to the side wall itself during grinding.

These substantially vertical arms are configured in such a way as to also impart a centrifugal force to the coffee powder with their movement and to convey it towards an opening made in the side wall of the grinding chamber to then make it exit from this towards an external chute.

Given the position of this opening, the exit of the coffee powder through it occurs partly due to the dragging effect due to the arms of the impeller, and partly due to the centrifugal effect imparted by these to the powder itself.

Since the coffee powder is present throughout the grinding chamber while the opening for its exit from this has a well-defined position on its side wall, when the impeller and the mobile grinder are stopped at the end of the grinding, a certain quantity of dust remains inside the grinding chamber and is not used. For example, if 7/8 grams of coffee powder are used to produce a cup of espresso, a substantially similar quantity of coffee powder generally remains inside the coffee grinder and can only be removed at the next grinding cycle.

This constitutes a limitation of current coffee grinders of this type, given that the current trend is to grind coffee *on demand,* i.e. only at the moment of its use to prepare the infusion, in order to maintain its aroma intact, which as is known it tends to alter as time passes between obtaining and using the coffee powder.

It is clear that this trend requires reducing the so-called retention time to a minimum, i.e. the time between grinding the coffee and using the powder obtained.

If the coffee grinder is used in an environment in which there is a continuous demand for coffee infusions, in particular in a bar, the substantially continuous demand for coffee powder makes the time spent in the grinding chamber of the coffee grinder practically insignificant , while if the coffee grinder is used in a domestic environment or in any case in an environment with low demand for coffee, the residence time of coffee powder in the coffee grinder before its use can be long, and since the quantity of coffee powder that remains for a long time inside the grinding chamber is substantially equal to the quantity of coffee needed to prepare an infusion, in practice a large number of infusions are prepared with coffee powder retained for a long time in the coffee grinder.

EP 3808236 already describes a coffee grinder which addresses the technical problem of differentiating the rotation speed of the mobile grinder, which must be low so as not to excessively heat the coffee powder obtained, from the rotation speed of the impeller, which must be higher to give the coffee powder sufficient centrifugal force to exit completely or almost completely from the grinding chamber, avoiding its permanence in the coffee grinder for periods of time which may even be long. According to this previous document, the technical problem just stated is solved with a coffee grinder equipped provided with two chambers for collecting the coffee powder and more particularly with a first collection chamber, which is located in a position below the mobile grinder and houses a rotating blade integrally with said mobile grinder and configured to collect the coffee powder and to convey it into a second collection chamber through an opening provided therein. A second paddle is housed in this second collection chamber, which can be rotated at a different speed, in particular a higher one, to impart a greater centrifugal force to the coffee powder and thus facilitate its exit from this second collection chamber.

This solution proved to be more advantageous than the previous technique, and in particular it allowed the coffee beans to be ground at low speed, and therefore without excessively heating the coffee powder obtained, and at the same time it allowed it to come out in an almost total quantity. from this second collection chamber, but at the same time it did not prove to be completely satisfactory both due to the manufacturing complexity of the coffee grinder, which must have two coffee powder collection chambers and two rotating blades mounted on two distinct parallel shafts, and because it did not eliminate the permanence of coffee powder in the first collection chamber when the coffee grinder stops working. This is because the greater speed with which the second paddle may be rotated to allow the coffee powder to come out more completely from the second collection chamber cannot have any effect on the coffee powder that is still in the first chamber. collection.

The aim of the invention is to eliminate all these drawbacks and to create an electric coffee grinder in which the quantity of coffee powder retained inside the grinding chamber and not immediately used is practically eliminated.

Another aim of the invention is to create a coffee grinder that can use mobile grinders of any type, and in particular conical or flat mobile grinders.

Another aim of the invention is to create a coffee grinder whose performance can be easily adapted to different types of coffee and/or to different user needs.

Another aim of the invention is to create a coffee grinder which, compared to coffee grinders with similar performance, is simpler to manufacture and more reliable in operation.

Another aim of the invention is to create a coffee grinder capable of offering performances that cannot be obtained with traditional coffee grinders.

All these aims and others that will result from the following description can be jointly or separately achieved according to the invention with an electric coffee grinder, as defined in claim 1.

The present invention is further clarified below in some of its preferred practical embodiments described for purely illustrative and non-limiting purposes with reference to the attached drawings in which:
- Figure 1: shows a vertical section of a coffee grinder according to the invention in a first embodiment with two independent motors of the mobile grinder and the impeller inside the grinding chamber,
- Figure 2: shows an exploded perspective view of its internal part concerning the movement of the mobile grinder and the impeller,
- Figure 3: shows it in an exploded perspective view in a second embodiment with a single engine,
- Figure 4: shows it in this second embodiment in a vertical section taken along the axis of the single engine.

As can be seen from the figures, the coffee grinder according to the invention is externally similar to a traditional coffee grinder and comprises a base 1 which houses the motorization of the grinding apparatus inside it and which supports a container 3 of the coffee beans to be ground and a conveyor of the coffee powder obtained.

Furthermore, the illustrated coffee grinder uses a pair of so-called conical grinders, comprising in particular a mobile grinder 2 with the active part significantly conical, cooperating with a fixed grinder 4 with an essentially complementary shape, however, the present invention is also applicable to pairs of so-called "flat" millstones, i.e. comprising a mobile millstone provided with an active band in the shape of a flat or almost flat circular crown, cooperating with a fixed millstone, also provided with an active band at flat or almost flat circular crown shape.

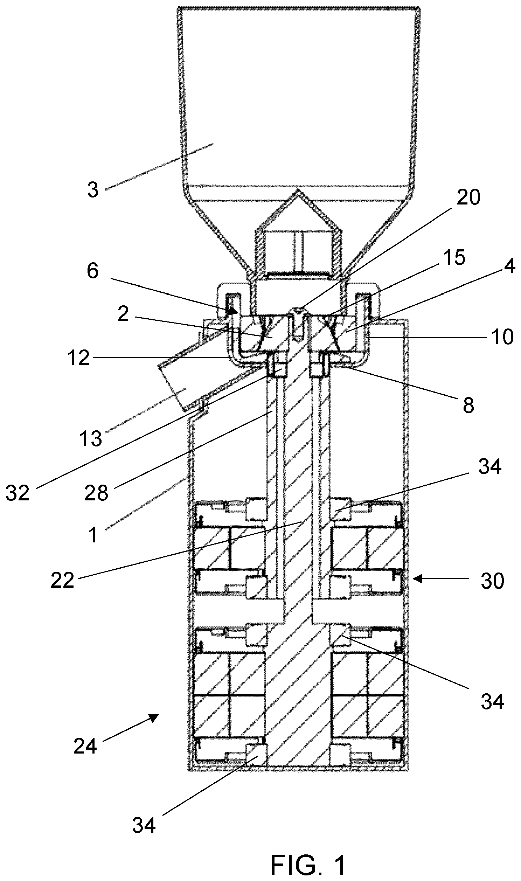

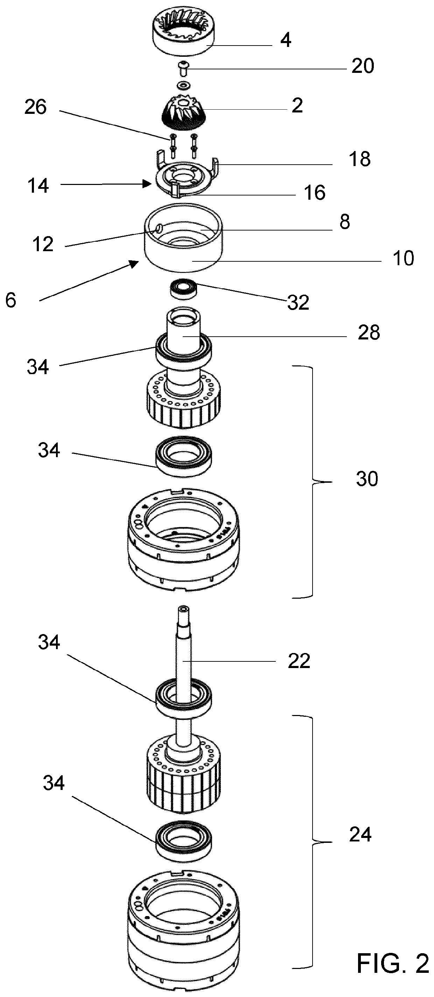

With reference to figures 1 and 2, the coffee grinder according to the invention comprises a grinding chamber 6 having an essentially cylindrical shape, open at the top and i.e. comprising a bottom 8 and a cylindrical side wall 10, on which there is obtained, near the bottom, a through opening 12, having an axis slightly inclined downwards and designed to connect the grinding chamber 6 with an external chute 13 for the evacuation of the coffee powder as it is produced.

Inside the grinding chamber 6 are housed the mobile grinder 2, a fixed grinder 4 and an impeller 14.

The mobile grinder 2 has a traditional overall conical shape, although the invention could also find application in coffee grinders with fixed flat-type grinders, as defined above.

The fixed grinder 4 has a shape which in the lower part is substantially complementary to the lower part of the mobile grinder 2 and with the latter delimits the grinding slot in a traditional manner.

In the upper part, the mobile grinder 2 and the fixed grinder 4 delimit between them a circumferential groove 15 with a flared profile for collecting the coffee beans to be ground coming by gravity from an overlying feeding container, not shown as it is traditional in itself.

The fixed grinder 4 is connected with its non-active part to the grinding chamber 6 in a traditional way, which does not require further explanation.

The impeller 14 can advantageously include an annular element 16, which in operation is positioned between the mobile grinder 2 and the bottom 8 of the grinding chamber 6, and can also include a plurality of arms 18, which extend from said annular element 16 and they develop vertically upwards in close proximity to the side wall 10 of the grinding chamber 6.

The mobile grinder 2 is fixed, for example by means of a screw 20, to the upper end of a vertical shaft 22, which constitutes the extension of the shaft of a first electric motor 24 housed inside the base 1 of the coffee grinder.

The impeller 14 is fixed, for example, by means of screws 26, to the upper end of a tubular shaft 28, which is externally coaxial to the shaft 22 and constitutes the extension of the shaft of a second electric motor 30, also housed inside the base of the coffee grinder in a position above the first electric motor 24.

Therefore, the shaft 22 of the first electric motor 24 runs for its entire extension inside the tubular shaft 28 of the second electric motor 30 and is kept axially centered with respect to this by a rolling bearing 32 placed between their upper ends, as well as naturally by traditional bearings 34 placed between the rotor and stator of each motor 24,30.

The two motors 24,30 can be powered and controlled independently of each other and therefore can rotate the mobile mill 2 and the impeller 14 at the appropriate speeds.

This allows the mobile grinder 2 to be rotated at the most suitable speed for optimal grinding of the coffee beans, a speed which advantageously is between 100 and 1,000 revolutions per minute and is preferably equal to 200 - 300 revolutions per minute, as the more suitable for obtaining effective grinding without overheating the coffee powder and therefore without causing an unwanted dispersion of its aromas. At the same time, the independent control of the two electric motors 24,30 not only allows the impeller to rotate at the most suitable speed to give the coffee powder the centrifugal force necessary to make it come out of the opening 12 (speed generally between 500 and 1,500 revolutions per minute) but also to continue to rotate the impeller 14 even after the mobile grinder 2 has finished grinding the coffee beans, and to thus ensure the complete evacuation of the coffee powder from the grinding chamber 6.

Advantageously, both electric motors 24,30 can be made up of torque motors.

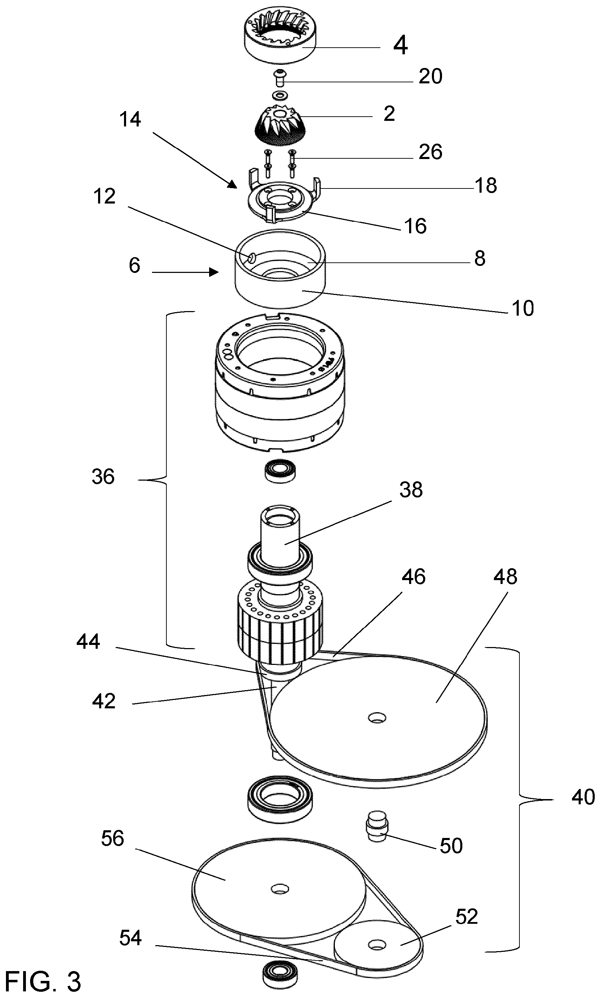

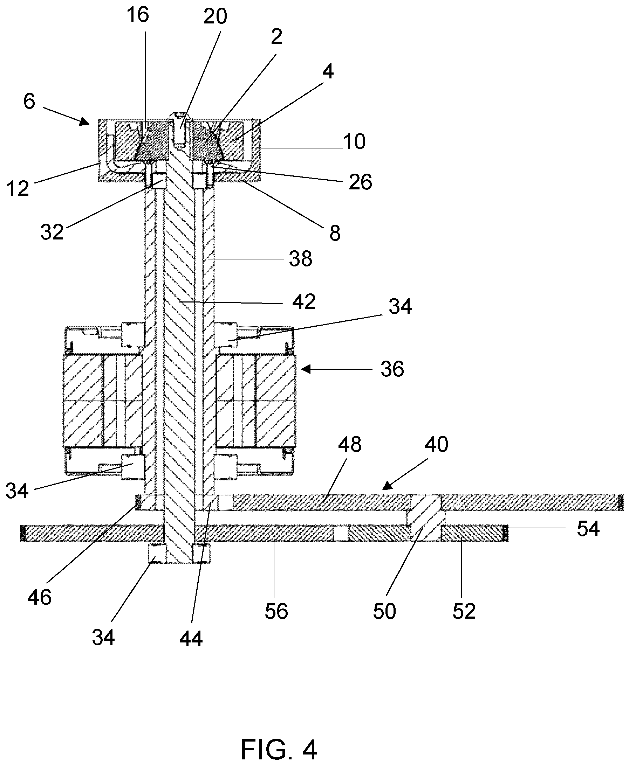

The embodiment illustrated in figures 3 and 4 differs from the previous embodiment in that, although it provides a differentiation between the rotation speeds of the mobile grinder 2 and the rotation speed of the impeller 14, it achieves this differentiation by using a single electric motor 36, which also in this case can advantageously consist of a torque motor.

The shaft 38 of the electric motor 36 is hollow and has the impeller 14 applied to the upper end, while a kinematic mechanism 40, preferably with toothed belts, is applied to the lower end, through which actuates in rotation at a lower speed, linked to the ratio of predefined reduction, a shaft 42, running coaxially inside the shaft 38 and having the mobile grinder 2 applied to the upper end.

More particularly, a first toothed wheel 44, of small diameter, is integral with the shaft 38 of the electric motor 36, to which a second toothed wheel 48 of larger diameter is coupled, via a first toothed belt 46. This second toothed wheel 48 is integral with a small shaft 50, which is supported by the base of the coffee grinder so that it can rotate around its own axis and which carries integrally a third toothed wheel 52, of small diameter, to which it is coupled, via a second toothed belt 54, a fourth toothed wheel 56 of larger diameter, in turn integral with the shaft 42.

In this way, with a single electric motor 36 it is possible to obtain differentiated speeds of the mobile grinder 2 and of the impeller 14, so that each of these can rotate at the most suitable speed for the function to be performed.

This second embodiment is more advantageous than the previous one in terms of simplicity and cost-effectiveness of production, since it uses only one electric motor 36, but at the same time it is more disadvantageous from a performance point of view, both because it does not allow to control independently the rotation speeds of the mobile grinder 2 and of the impeller 14, both because it does not allow the impeller 14 to be kept rotating after the grinding of the coffee beans has ceased and therefore does not ensure the complete evacuation of the coffee powder produced. The invention also envisages a variant of this second embodiment (not shown in the drawings), with the electric motor 36 coupled directly to the mobile grinder 2 and indirectly coupled, via a speed amplifier kinematic mechanism, to the impeller 14.

In another variant of this second embodiment (not illustrated in the drawings) the mechanical connection between the single electric motor 36 and the mobile grinder 2 can be advantageously obtained with a decoupable joint, for example of the electromagnetic type, which allows that after the rotation of the mobile grinder 2 has stopped, the electric motor 36 continues to be powered a little longer in order to continue the rotation of the impeller 14 for a predefined time, sufficient to ensure the complete evacuation of the coffee powder produced. This embodiment variant allows not only to continue the rotation of the impeller even after the mechanical connection between the electric motor 36 and the mobile mill 2 has been interrupted, but also to rotate the electric motor 36 in the direction of rotation for a short period of time. on the contrary, if this is required for particular needs, for example to cause a brief suction effect on the coffee powder possibly deposited on an antistatic comb, often provided in the coffee powder evacuation duct 13 to neutralize the electrostatic charges that can be generated in this during the grinding process.

## Claims

1. Electric coffee grinder with a fixed grinder (4) and a mobile grinder (2) arranged inside a grinding chamber (6), which has an essentially cylindrical shape and is provided with at least one inlet opening for the intended coffee beans to be ground between the two grinders (2,4) and with an impeller (14) arranged inside said grinding chamber (6) in a position underneath said mobile grinder (2) and provided with arms (18) configured to cause the leakage of coffee powder, which is obtained by grinding said beans, through at least one outlet opening (12) foreseen in the side wall (10) of said grinding chamber (6), **characterized in that** said mobile grinder (2) and said impeller (14) are coaxial and are connected to means (24,30,36) for their rotation at different speeds.

2. Electric coffee grinder according to claim 1 **characterized in that** the rotation speed of said mobile grinder (2) is between 100 and 1,000 revolutions per minute, preferably between 200 and 300 revolutions per minute, and the rotation speed of said impeller (14) is between 500 and 1500 rpm.

3. Electric coffee grinder according to one or more of the previous claims **characterized in that** said mobile grinder (2) and said impeller (14) are mechanically connected to separate electric motors (24,30).

4. Electric coffee grinder according to one or more of the previous claims **characterized in that** said impeller (14) comprises a substantially annular element (16), placed between said mobile grinder (2) and the bottom (8) of said grinding chamber (6), and a plurality of arms (18) which depart from said annular element (16) and develop upwards in close proximity to the side wall (10) of said grinding chamber (6).

5. Electric coffee grinder according to claim 1 **characterized in that** said mobile grinder (2) and said impeller (14) are mechanically connected with different transmission ratios to a single electric motor (36).

6. Electric coffee grinder according to claim 5 **characterized in that** the coupling between said single electric motor (36) and said impeller (14) or said mobile grinder (2) is direct, while the coupling between said single electric motor (36) and said mobile grinder (2) or said impeller (14) is obtained with a speed variator kinematics (40).

7. Electric coffee grinder according to claim 6 **characterized in that** said speed variator mechanism is of the belt and pulley type.

8. Electric coffee grinder according to one or more of the previous claims **characterized in that** said electric motors (24,30,36) are made up of torque motors.

9. Electric coffee grinder according to one or more of the previous claims **characterized by** the fact that said mobile grinder (2) is of the conical type and is coupled with a fixed grinder (4) of the hollow truncated cone type.

10. Electric coffee grinder according to one or more of the previous claims **characterized in that** said mobile grinder (2) is of the flat type and is coupled with a fixed grinder (14), also of the flat type.

11. Electric coffee grinder according to one or more of claims 5 to 10 **characterized in that** coupling means that can be deactivated are interposed between said motor (36) and said mobile grinder (2).

12. Electric coffee grinder according to claim 11 **characterized in that** an electromagnetic joint is interposed between said motor (36) and said mobile grinder (2).

## Patentansprüche

1. Elektrische Kaffeemühle mit einer feststehenden Mühle (4) und einer beweglichen Mühle (2), die innerhalb einer Mahlkammer (6) angeordnet ist, die eine im Wesentlichen zylindrische Form aufweist und mit mindestens einer Einlassöffnung für die bestimmten zu mahlenden Kaffeebohnen zwischen den zwei Mühlen (2, 4) und mit einem Laufrad (14) versehen ist, das innerhalb der Mahlkammer (6) in einer Position unterhalb der beweglichen Mühle (2) angeordnet ist und mit Armen (18) versehen ist, die konfiguriert sind, um das Auslaufen von Kaffeepulver, das durch Mahlen der Bohnen erhalten wird, durch mindestens eine Auslassöffnung (12) zu bewirken, die in der Seitenwand (10) der Mahlkammer (6) vorgesehen ist, **dadurch gekennzeichnet, dass** die bewegliche Mühle (2) und das Laufrad (14) koaxial sind und mit Mitteln (24, 30, 36) zu ihrer Drehung mit unterschiedlichen Geschwindigkeiten verbunden sind.

2. Elektrische Kaffeemühle nach Anspruch 1, **dadurch gekennzeichnet, dass** die Rotationsgeschwindigkeit der beweglichen Mühle (2) zwischen 100 und 1000 Umdrehungen pro Minute, vorzugsweise zwischen 200 und 300 Umdrehungen pro Minute, und die Rotationsgeschwindigkeit des Laufrads (14) zwischen 500 und 1500 U/min liegt.

3. Elektrische Kaffeemühle nach einem oder mehreren der vorhergehenden Ansprüche, **dadurch gekennzeichnet, dass** die bewegliche Mühle (2) und das Laufrad (14) mechanisch mit separaten Elektromotoren (24, 30) verbunden sind.

4. Elektrische Kaffeemühle nach einem oder mehreren der vorhergehenden Ansprüche, **dadurch gekennzeichnet, dass** das Laufrad (14) ein im Wesentlichen ringförmiges Element (16), das zwischen der beweglichen Mühle (2) und dem Boden (8) der Mahlkammer (6) angeordnet ist, und eine Vielzahl von Armen (18) umfasst, die von dem ringförmigen Element (16) abgehen und sich in unmittelbarer Nähe der Seitenwand (10) der Mahlkammer (6) nach oben entwickeln.

5. Elektrische Kaffeemühle nach Anspruch 1, **dadurch gekennzeichnet, dass** die bewegliche Mühle (2) und das Laufrad (14) mit unterschiedlichen Übersetzungsverhältnissen mechanisch mit einem einzigen Elektromotor (36) verbunden sind.

6. Elektrische Kaffeemühle nach Anspruch 5, **dadurch gekennzeichnet, dass** die Kopplung zwischen dem einzelnen Elektromotor (36) und dem Laufrad (14) oder der beweglichen Mühle (2) direkt erfolgt, während die Kopplung zwischen dem einzelnen Elektromotor (36) und der beweglichen Mühle (2) oder dem Laufrad (14) mit einer Geschwindigkeitsreglerkinematik (40) erzielt wird.

7. Elektrische Kaffeemühle nach Anspruch 6, **dadurch gekennzeichnet, dass** der Geschwindigkeitsreglermechanismus vom Riemen- und Riemenscheibentyp ist.

8. Elektrische Kaffeemühle nach einem oder mehreren der vorhergehenden Ansprüche, **dadurch gekennzeichnet, dass** die Elektromotoren (24, 30, 36) aus Drehmomentmotoren bestehen.

9. Elektrische Kaffeemühle nach einem oder mehreren der vorhergehenden Ansprüche, **dadurch gekennzeichnet, dass** die bewegliche Mühle (2) vom konischen Typ ist und mit einer feststehenden Mühle (4) vom Typ Hohlkegelstumpf gekoppelt ist.

10. Elektrische Kaffeemühle nach einem oder mehreren der vorhergehenden Ansprüche, **dadurch gekennzeichnet, dass** die bewegliche Mühle (2) vom flachen Typ ist und mit einer feststehenden Mühle (14), ebenfalls vom flachen Typ, gekoppelt ist.

11. Elektrische Kaffeemühle nach einem oder mehreren der Ansprüche 5 bis 10, **dadurch gekennzeichnet, dass** Kupplungsmittel, die deaktiviert werden können, zwischen dem Motor (36) und der beweglichen Mühle (2) eingesetzt sind.

12. Elektrische Kaffeemühle nach Anspruch 11, **dadurch gekennzeichnet, dass** eine elektromagnetische Verbindung zwischen dem Motor (36) und der beweglichen Mühle (2) eingesetzt ist.

## Revendications

1. Moulin à café électrique avec un broyeur fixe (4) et un broyeur mobile (2) disposés à l'intérieur d'une chambre de broyage (6), qui a une forme essentiellement cylindrique et est pourvue d'au moins une ouverture d'entrée pour les grains de café destinés à être broyés entre les deux broyeurs (2, 4) et d'une roue (14) disposée à l'intérieur de ladite chambre de broyage (6) dans une position située sous ledit broyeur mobile (2) et pourvue de bras (18) configurés pour provoquer l'écoulement de la poudre de café, obtenue par le broyage desdits grains, à travers au moins une ouverture de sortie (12) prévue dans la paroi latérale (10) de ladite chambre de broyage (6), **caractérisé en ce que** ledit broyeur mobile (2) et ladite roue (14) sont coaxiaux et reliés à des moyens (24, 30, 36) pour leur rotation à des vitesses différentes.

2. Moulin à café électrique selon la revendication 1, **caractérisé en ce que** la vitesse de rotation dudit broyeur mobile (2) est comprise entre 100 et 1000 tours par minute, de préférence entre 200 et 300 tours par minute, et que la vitesse de rotation de ladite roue (14) est comprise entre 500 et 1500 tours par minute.

3. Moulin à café électrique selon une ou plusieurs des revendications précédentes, **caractérisé en ce que** ledit broyeur mobile (2) et ladite roue (14) sont reliés mécaniquement à des moteurs électriques séparés (24, 30).

4. Moulin à café électrique selon une ou plusieurs des revendications précédentes, **caractérisé en ce que** ladite roue (14) comprend un élément sensiblement annulaire (16), placé entre ledit broyeur mobile (2) et le fond (8) de ladite chambre de broyage (6), et une pluralité de bras (18) qui partent dudit élément annulaire (16) et se développent vers le haut à proximité immédiate de la paroi latérale (10) de ladite chambre de broyage (6).

5. Moulin à café électrique selon la revendication 1, **caractérisé en ce que** ledit broyeur mobile (2) et ladite roue (14) sont reliés mécaniquement avec différents rapports de transmission à un unique moteur électrique (36).

6. Moulin à café électrique selon la revendication 5, **caractérisé en ce que** l'accouplement entre ledit moteur électrique unique (36) et ladite roue (14) ou ledit broyeur mobile (2) est direct, tandis que l'accouplement entre ledit moteur électrique unique (36) et ledit broyeur mobile (2) ou ladite roue (14) est obtenu avec une cinématique de variateur de vitesse (40).

7. Moulin à café électrique selon la revendication 6, **caractérisé en ce que** ledit mécanisme de variateur de vitesse est du type à courroie et poulie.

8. Moulin à café électrique selon une ou plusieurs des revendications précédentes, **caractérisé en ce que** lesdits moteurs électriques (24, 30, 36) sont constitués de moteurs-couple.

9. Moulin à café électrique selon une ou plusieurs des revendications précédentes, **caractérisé en ce que** ledit broyeur mobile (2) est du type conique et est couplé à un broyeur fixe (4) du type tronconique creux.

10. Moulin à café électrique selon une ou plusieurs des revendications précédentes, **caractérisé en ce que** ledit broyeur mobile (2) est du type plat et est couplé à un broyeur fixe (14), également du type plat.

11. Moulin à café électrique selon une ou plusieurs des revendications 5 à 10, **caractérisé en ce que** des moyens de couplage qui peuvent être désactivés sont interposés entre ledit moteur (36) et ledit broyeur mobile (2).

12. Moulin à café électrique selon la revendication 11, **caractérisé en ce qu'**un joint électromagnétique est interposé entre ledit moteur (36) et ledit broyeur mobile (2).
